# EUROPÄISCHE PATENTSCHRIFT

(11) **EP 1 062 550 B1**
(45) Veröffentlichungstag und Bekanntmachung des Hinweises auf die Patenterteilung: **23.10.2002**
(21) Anmeldenummer: 99907283.8
(22) Anmeldetag: 26.01.1999
(51) Int. Cl.: G05B 19/10, G05B 23/02

(54) **VERFAHREN UND VORRICHTUNG ZUR VERARBEITUNG VON ANWENDERSPEZIFISCH IN VERSCHIEDENEN DATENSPEICHERN HINTERLEGTEN DATEN EINER TECHNISCHEN ANLAGE**
METHOD AND DEVICE FOR PROCESSING THE DATA OF A TECHNICAL INSTALLATION WHICH IS STORED IN DIFFERENT DATA MEMORIES IN A USER-ORIENTED MANNER
PROCEDE ET DISPOSITIF DE TRAITEMENT DE DONNEES D'UNE INSTALLATION TECHNIQUE, CES DONNEES ETANT SPECIFIQUES UTILISATEUR ET ENREGISTREES DANS DIFFERENTES MEMOIRES DONNEES

(30) Priorität: 09.03.1998 DE 19810045
(43) Veröffentlichungstag der Anmeldung: 27.12.2000
(73) Patentinhaber: Siemens AG, 80333 München (DE)
(72) Erfinder: RÖBEN, Uwe, D-91325 Adelsdorf (DE); KLEINER, Michael, D-22399 Hamburg (DE); STURM, Adolf, D-22457 Hamburg (DE)
(86) Internationale Anmeldenummer: DE9900198
(87) Internationale Veröffentlichungsnummer: WO99046649

(56) Entgegenhaltungen:
- EP-A- 0 389 132
- US-A- 5 588 109

## Beschreibung

Die Erfindung betrifft eine Vorrichtung zur Verarbeitung von anwenderspezifisch in verschiedenen Datenspeichern hinterlegten Daten oder Informationen einer technischen Anlage, insbesondere einer Kraftwerksanlage. Unter verschiedenen Datenspeichern werden hierbei insbesondere unterschiedliche Informationsverarbeitungssysteme, Datenverarbeitungssysteme oder Datenbanken, die auf unterschiedlichen Betriebssystemen basieren, verstanden.

In einer Kraftwerksanlage soll ein Betriebsführungssystem sowohl die Prozeßsteuerung und -überwachung als auch die Instandhaltung der Kraftwerksanlage ermöglichen. Dazu ist das Betriebsführungssystem in eine Anzahl von funktionsfähigen Einheiten oder Systemen unterteilt. Dabei werden die für das jeweilige System erforderlichen Funktionen üblicherweise in eine Anzahl von Funktionsgruppen gegliedert. Ein solches System ist beispielsweise aus der internationalen Anmeldung PCT WO 94/27195 bekannt.

Beispielsweise umfaßt das Betriebsführungssystem zur Prozeßsteuerung als ein erstes System ein Automatisierungssystem, welches der Erfassung von physikalischen Größen in Form von Meßwerten oder Meldesignalen und deren anschließenden Verarbeitung zu Steuersignalen, die Anlagenteile oder Komponenten der Kraftwerksanlage steuern, dient.

Ein zweites System, ein Prozeßführungs- und/oder Prozeßinformationssystem, welches die Informationen oder Daten des Automatisierungssystems verarbeitet, visualisiert und auswertet, dient der Prozeßüberwachung und Prozeßanalyse. Ein solches System ist beispielsweise aus dem Dokument "ABB Technik", 1/1997, Seiten 13 bis 18, oder dem Dokument "atp", 12/96, Seiten 37 bis 45, bekannt.

Ein drittes System, ein Management-, Instandhaltungs- oder Verwaltungssystem, dient der Überwachung der Finanzen sowie der Materialwirtschaft und Dokumentation der Kraftwerksanlage. Alle drei Systeme des Betriebsführungssystems sind über Schnittstellen oder Datenbussysteme miteinander verbunden. Mit zunehmender Energie- und/oder Arbeitsausnutzung derartiger Anlagen sowie mit zunehmender Steigerung ihres Sicherheitsstandards wachsen auch die Anforderungen an die einzelnen Systeme des Betriebsführungssystems hinsichtlich der Verarbeitung und Speicherungen großer Datenmengen. Dadurch bedingt werden die in den einzelnen Systemen anfallenden Informationen oder Daten in diesen durch vorgesehene Informationsfilter hierarchisch aufgebaut und archiviert. Dabei werden häufig in den einzelnen Hierarchieebenen und/oder in den einzelnen Systemen spezielle und bezüglich ihrer Leistung sehr unterschiedliche Hardware- und Software-Systeme verwendet, die den jeweiligen Anforderungen gerecht werden. Zur Darstellung von verdichteten Informationen oder Daten in einer höheren Hierarchieebene oder in einem anderen System ist es häufig notwendig, die Daten der unterlagerten Hierarchieebenen bzw. des anderen Systems umzuwandeln. Dies ist besonders zeitintensiv und wegen der Komplexität derartiger Systeme sehr aufwendig. Darüber hinaus ist eine komplexe Darstellung von Informationen aller relevanten Systeme einschließlich aller Hierachieebenen nicht möglich. Vielmehr müssen jeweils die unterschiedlichen Systeme einzeln aufgerufen werden.

Der Erfindung liegt daher die Aufgabe zugrunde, ein Verfahren zur Verarbeitung von Daten oder Informationen einer technischen Anlage anzugeben, das die Auswahl von Daten in allen Betriebsphasen, also auch im Fall von Unregelmäßigkeiten oder Störungen des Prozeßablaufs, für die gesamte Anlage ermöglicht, so daß eine sichere Führung und Überwachung der Gesamtanlage ohne Überlastung des Bedienpersonals in besonders einfacher Weise gewährleistet ist. Weiterhin soll eine Vorrichtung angegeben werden, welche besonders zur Durchführung des Verfahrens geeignet ist.

Die erstgenannte Aufgabe wird durch ein Verfahren zur Verarbeitung von anwenderspezifisch in verschiedenen Datenspeichern hinterlegten Daten einer technischen Anlage, die in für die Prozeßführung relevante Funktionsgruppen und in für die Anlage relevante Funktionsgruppen unterteilt wird, erfindungsgemäß dadurch gelöst, daß sowohl die Funktionsgruppen für die Prozeßführung als auch die Funktionsgruppen für die Anlage jeweils einem Auswahlfeld einer gemeinsamen Auswahlmaske zugeordnet werden, wobei die die Funktionsgruppen repräsentierenden Auswahlfelder in einer ersten Darstellungsebene der Auswahlmaske derart abgebildet werden, daß mittels Verbindungen zwischen den Auswahlfeldern die Relationen zwischen den in Wechselwirkung miteinander stehenden Funktionsgruppen dargestellt werden, und wobei durch Anwahl eines der Auswahlfelder die jeweiligen für die Prozeßführung der Anlage relevanten Prozeßdaten oder für die Anlage relevanten Anlagendaten selektiert und in einer weiteren Darstellungsebene dargestellt werden.

Die Erfindung geht dabei von der Überlegung aus, daß mittels eines auf eine Mehrzahl von auf unterschiedlichen Hardware- und Softwaresystemen basierenden Betriebsführungssystems sowohl aktuelle, dynamische Prozeßdaten für die Prozeßführung als auch statische Anlagendaten für die Anlage verarbeitet, gefiltert, verdichtet und/oder strukturiert werden können. Ein Gesamtüberblick über den komplexen Anlagenprozeß sowie die Anlage ist nur dann leicht darzustellen, wenn die Daten oder Informationen der unterschiedlichen Datenverarbeitungssysteme in eine Anzahl von Funktionsgruppen für den Anlagenprozeß bzw. für die Anlagenstruktur unterteilt werden. Eine derartig komplexe Darstellung, die sowohl die Funktionsgruppen für die Prozeßführung als auch die Funktionsgruppen für die Anlage umfaßt, kann rascher geschaffen werden, wenn diese Funktionsgruppen entsprechend ihren Relationen zueinander sowie hinsichtlich des der jeweiligen Funktionsgruppe zugehörigen Datenbestandes gefiltert, verdichtet und/oder strukturiert werden. Dabei sollen die Funktionsgruppen sowie die diesen zugehörigen Informationen oder Daten unterschiedlicher Datenquellen oder Datenbanken in hierarchisch aufgebauten Ebenen unterschiedlicher Darstellungstiefen auf einem Ausgabegerät, z.B. einem Rechnerbildschirm, ausgegeben werden. Dabei ist es besonders vorteilhaft, wenn auch die Relationen zwischen Funktionsgruppen, die miteinander in Wechselwirkung stehen, durch entsprechend sichtbare Verbindungen auf dem Ausgabegerät dargestellt werden. Anhand derartiger aus Auswahlfeldern aufgebauten Darstellungsebenen ist dann durch Anwahl der jeweiligen Auswahlfelder eine schnelle und zuverlässige Selektion einzelner Daten oder Teilbereiche von Daten aus einer Anzahl von besonders umfangreichen und insbesondere unterschiedlichen Datenbeständen durchführbar.

Durch die gemeinsame Darstellung von aktuellen, dynamischen Prozeßdaten und statischen Anlagendaten können sowohl der momentane Prozeßzustand als auch daraus resultierende Maßnahmen für die Instandhaltung erkannt und eventuelle Störungen beseitigt werden. Durch die Integration von Zustandswissen und Instandhaltungsstrategien ist eine adäquate, schnelle und wirtschaftliche Überwachung und Wartung der Anlage auf unterschiedlichen Arbeitsebenen möglich.

Bedingt durch einen modularen und hierarchischen Aufbau des Betriebsführungssystems umfaßt jede Funktionsgruppe zweckmäßigerweise jeweils eine Anzahl von Funktionsebenen, denen jeweils eine Anzahl von weiteren Darstellungsebenen der Auswahlmaske zugeordnet werden. Durch Anwahl eines der Auswahlfelder einer Darstellungsebene wird analog zu der Anwahl einer einzelnen Funktionsgruppe ein der betreffenden Funktionsebene zugehöriger Teilbereich von Daten ausgewählt und dargestellt. Durch einen derartigen hierarchischen Aufbau der Auswahlmaske aus einer Anzahl von Darstellungsebenen, die jeweils eine Funktionsebene oder eine Funktionsgruppe repräsentieren, ist es dem Betriebspersonal ermöglicht, alle Funktionen und Informationen oder Daten für die Prozeßführung und für die Anlage von einem Arbeitsplatz aus zu bedienen bzw. zu überwachen.

Die Funktionsgruppen und/oder die Funktionsebenen werden vorzugsweise mit den jeweils zugehörigen Relationen in einem separaten Datenspeicher hinterlegt. Durch eine derartige Hinterlegung der Relationen, welche insbesondere die Wechselwirkungen und Zusammenhänge von den Funktionsgruppen und/oder den Funktionsebenen untereinander sowie miteinander wiedergeben, und durch die Darstellung dieser Relationen (z.B. Verbindungslinien) ist eine Aussage über den Zustand der Gesamtanlage sowie deren Anlagenteile in Abhängigkeit von momentanen Instandhaltungsmaßnahmen sowie Instandhaltungsstrategien ermöglicht.

Die zweite Aufgabe wird bei einer Vorrichtung zur Verarbeitung von anwenderspezifisch in verschiedenen Datenspeichern hinterlegte Daten einer technischen Anlage, die in für die Prozeßführung relevante Funktionsgruppen und in für die Anlage relevante Funktionsgruppen unterteilt ist, erfindungsgemäß gelöst durch eine Auswahlmaske mit einer Mehrzahl von Auswahlfeldern, denen sowohl Funktionsgruppen für die Prozeßführung als auch Funktionsgruppen für die Anlage zugeordnet sind, wobei die die Funktionsgruppen repräsentierenden Auswahlfelder in einer ersten Darstellungsebene der Auswahlmaske derart abgebildet sind, daß mittels Verbindungen zwischen den Auswahlfeldern die Relationen zwischen den in Wechselwirkung miteinander stehenden Funktionsgruppen dargestellt sind, und wobei durch Anwahl eines der Auswahlfelder die jeweiligen für die Prozeßführung der Anlage relevanten Prozeßdaten oder für die Anlage relevanten Anlagendaten selektierbar und in einer weiteren Darstellungsebene darstellbar sind. Durch Anwahl einer Kombination von Auswahlfeldern und/oder einzelner Alternativen in den Auswahlfeldern der Auswahlmaske ist in besonders einfacher Art und Weise jeder Teilbereich des Datenbestandes auswählbar.

Darüber hinaus ist zweckmäßigerweise jede Funktionsgruppe in eine Anzahl von Funktionsebenen unterteilt, denen jeweils eine Anzahl von weiteren Darstellungsebenen der Auswahlmaske zugeordnet sind, wobei durch Anwahl eines der Auswahlfelder einer Darstellungsebene ein der betreffenden Funktionsebene zugehöriger Teilbereich der Daten auswählbar und darstellbar ist.

Zur Speicherung der Funktionsgruppe und/oder der Funktionsebenen mit den jeweils zugehörigen Relationen ist zweckmäßigerweise eine relationale Datenbank vorgesehen.

Die mit der Erfindung erzielten Vorteile bestehen insbesondere darin, daß durch eine Aufteilung des gesamten Anlagenprozesses sowie der Gesamtanlage in wenige, logische Funktionsgruppen, die z.B. jeweils Prozeßabschnitte oder erforderliche Anlagenfunktionen darstellen, ein hoher Automatisierungsgrad mit einer extrem hohen Informationsverdichtung auf wenige, zu beobachtende Prozeßdaten und Anlagenteile erreicht wird. Darüber hinaus kann unabhängig vom verwendeten Datenverarbeitungssystem die Auswahlmaske in jeder Hierarchieebene auf einem jeweils zugehörigen Arbeitsplatz oder Bedienerstation abgerufen werden. Mit anderen Worten: Sowohl auf einer Bedienstation eines übergeordneten Management- oder Instandhaltungssystems als auch eines untergeordneten und technisch leistungsfähigerem Prozeßführungssystems ist die Auswahlmaske aufrufbar. Somit kann der gesamte Anlagenprozeß in jeder Betriebsphase von jedem Betriebsort von nur einer Person gesteuert und überwacht werden.

Zur näheren Erläuterung der Erfindung werden anhand einer Zeichnung Ausführungsbeispiele beschrieben. Darin zeigen:
- Figur 1: ein Funktionsschema eines Verarbeitungssystems für Daten einer technischen Anlage und
- Figur 2: einen Ausschnitt II aus Figur 1 in größerem Maßstab mit Komponenten eine Auswahlmaske.

Einander entsprechende Teile sind in beiden Figuren mit denselben Bezugszeichen versehen.

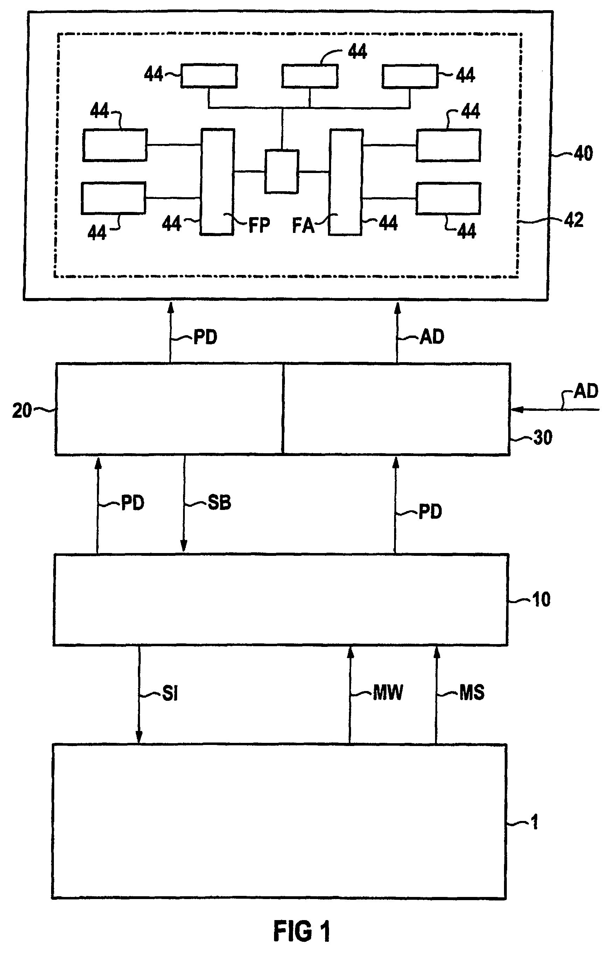

Als technischen Anlage 1 ist in Figur 1 schematisch eine Gas- und Dampfturbinenanlage dargestellt. Diese umfaßt eine Gasturbine 2 und einen dieser rauchgasseitig nachgeschalteten Abhitzedampferzeuger 4, dessen Heizflächen - in nicht näher dargestellter Art und Weise - in den Wasser-Dampf-Kreislauf 6 einer Dampfturbine 8 geschaltet sind. In der Anlage 1 erfaßte Meßwerte MW sowie von dort abgegebene Meldesignale MS werden einem Automatisierungssystem 10 zugeführt.

In Automatisierungseinheiten des Automatisierungssystems 10 werden einerseits die Meßwerte MW und die Meldesignale MS vorverarbeitet und in Prozeßdaten PD umgewandelt. Zu Steuerzwecken werden andererseits von dort Steuersignal SI an die Anlagenteile oder Komponenten 2, 4, 6, 8 der Anlage 1 abgegeben. Die Prozeßdaten PD werden einem zentralen Prozeßsystem 20, z.B. einem Prozeßführungs- und Prozeßinformationssystem, zugeführt. Zu Steuerzwecken werden von dem zentralen Prozeßsystem 20 Steuerbefehle SB an das Automatisierungssystem 10, die dort in Steuersignale SI umgewandelt werden, abgegeben. Das Prozeßsystem 20 kann dabei insbesondere ein Personalcomputer oder eine andere Datenverarbeitungseinheit sein. Das zentrale Prozeßsystem 20 dient insbesondere der Prozeßführung und Prozeßüberwachung. Bedingt durch die Komplexität des Anlagenprozesses sowie durch die gegebenenfalls schnell auszulösenden Maßnahmen bei einem Störfall sind das Automatisierungssystem 10 und das zentrale Prozeßsystem 20 beispielsweise aus schnell reagierenden speicherprogrammierbaren Steuerungen bzw. aus leistungsfähigen Workstationen aufgebaut.

Darüber hinaus werden die Prozeßdaten PD einem Verarbeitungssystem 30 zugeführt. Das Verarbeitungssystem 30, welches der Instandhaltung und Zustandsüberwachung der Anlage 1 dient, basiert dem Prozeßsystem 20 gegenüber auf einer Rechnergeneration mit einer anderen Leistungsebene. Dem Verarbeitungssystem 30 werden von nicht näher dargestellten Datenverarbeitungssystemen, z.B. einem Personalcomputer des Anlagenbereiches "Finanzen" oder "Materialwirtschaft", Informationen in Form von Anlagendaten AD, welche für die Betriebsführung der Anlage 1 relevant sind, übermittelt.

Zur Prozeßanalyse und -auswertung werden die Prozeßdaten PD in Datenspeichern des Prozeßsystems 20 hinterlegt. Bedingt durch die Komplexität der Anlage 1 und daraus resultierend die große Menge an zu verarbeitenden Prozeßdaten PD sind als Datenspeicher entsprechende Datenbanksysteme, z.B. Oracle-Datenbank, SQL-Server, vorgesehen. Die Anlagedaten AD sind dagegen aufgrund des auf einer anderen Hardware basierenden Verarbeitungssystems 30 in entsprechend anderen Datenspeichern hinterlegt.

Das Automatisierungssystem 10, das zentrale Prozeßsystem 20 sowie das Verarbeitungssystem 30 sind miteinander über einen nicht näher dargestellten Datenbus zum Datenaustausch verbunden. Die Prozeßdaten PD und die Anlagendaten AD des Prozeßsystems 20 bzw. des Verarbeitungssystems 30 werden mittels des Datenbusses einem Ausgabemodul 40 zugeführt. Als Ausgabemodul 40 ist beispielsweise ein Bildschirm einer Bedien- oder Arbeitsstation des Prozeßsystems 20 oder des Verarbeitungssystems 30 vorgesehen.

Der Gesamtprozeß der Anlage 1 ist vorteilhafterweise in eine Anzahl von für die Prozeßführung relevanten Funktionsgruppen FP unterteilt, mit welchen die Anlage 1 gesteuert und überwacht wird. Diese Funktionsgruppen FP sind entsprechend dem logischen Prozeßablauf der Anlage 1 beispielsweise in folgender Reihenfolge hierarchisch organisiert: Versorgung, Entsorgung, Transport von Prozeßwärme, Umwandlung von Primärenergie in Wärmeenergie, Umwandlung der Wärmeenergie in elektrische Energie, Visualisierung, Bilanzen etc. Das Verarbeitungssystem 30 ist ebenfalls in eine Anzahl von für die Anlage 1 relevanten Funktionsgruppen FA unterteilt, welche der Instandhaltung und Verwaltung der Anlage 1 dienen. Diese anlagenrelevanten Funktionsgruppen FA sind entsprechend der logischen Struktur der Anlage 1 ebenfalls hierarchisch organisiert, z.B.: Material, Kosten, Dokumentation, Investition, Service etc.

Für eine zeitoptimierte und rationelle Betriebsführung sind sowohl die Funktionsgruppen FP für die Prozeßführung als auch die Funktionsgruppen FA für die Anlage 1 in einer Auswahlmaske 42 eines Ausgabemoduls 40 graphisch darstellbar. Dazu umfaßt die Auswahlmaske 42 eine Mehrzahl von Auswahlfeldern 44, die jeweils eine der Funktionsgruppen FP, FA repräsentieren.

Die einzelnen Auswahlfelder 44 sind in Abhängigkeit von der zwischen den jeweiligen Funktionsgruppen FP und FA bestehenden Wechselwirkungen miteinander verbunden. Mit anderen Worten: Die Verbindungen der einzelnen Auswahlfelder 44 stellen die Relationen zwischen den einzelnen Funktionsgruppen FP, FA dar. Die Funktionsgruppen FP, FA mit den zugehörigen Relationen sind in einem weiteren Datenspeicher des Prozeßsystems 20 und/oder des Verarbeitungssystems 30 hinterlegt. Als Datenspeicher dient dabei eine relationale Datenbank.

Mittels der Auswahlmaske 42 werden durch Anwahl eines einzelnen Auswahlfeldes 44 die für die jeweilige Funktionsgruppe FP oder FA relevanten Prozeßdaten PD bzw. Anlagendaten AD selektiert und in einer weiteren Darstellungsebene dargestellt. Somit sind die durch den Anlagenprozeß und die Anlage 1 hierarchisch strukturierten Ebenen, wie z.B. die Prozeßebene für die Anlage 1, die Automatisierungsebene für das Automatisierungssystem 10, die Betriebsebene für da Prozeßsystem 20 und die Unternehmensebene für das Verarbeitungssystem 30, durch entsprechende Darstellungsebenen in der Auswahlmaske 42 repräsentiert.

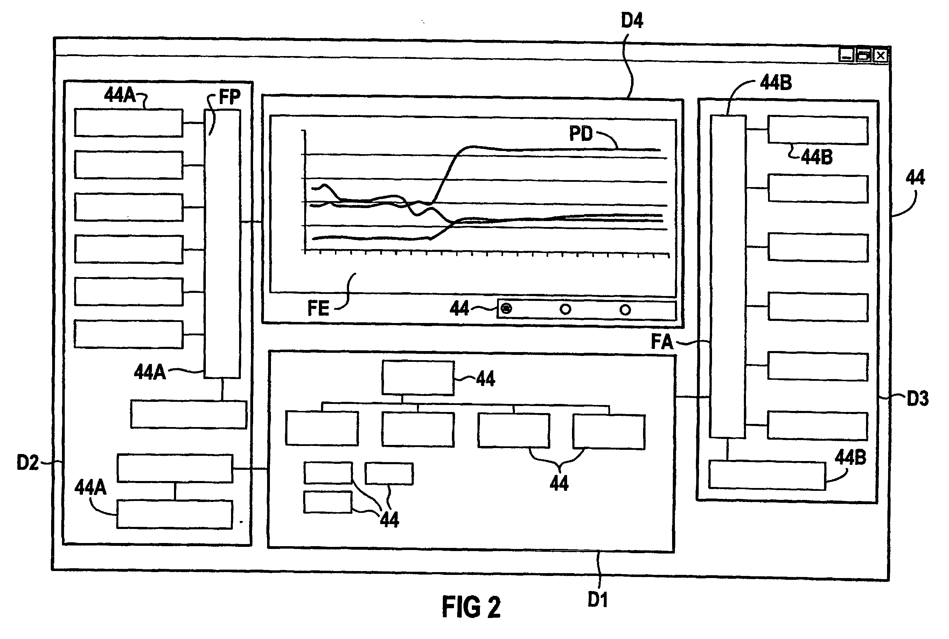

Die Figur 2 zeigt ein Beispiel einer Auswahlmaske 42 mit vier Darstellungsebenen D1 bis D4. Die Darstellungsebene D1 repräsentiert den Gesamtüberblick der Anlage 1. Die technologische Struktur der Anlage 1 ist dabei in Form von Auswahlfeldern 44 dargestellt. Durch Anwahl eines der Auswahlfelder 44 wird dann der zugehörigen Teilbereich der Anlagendaten AD und/oder der Prozeßdaten PD ausgewählt und in einer weiteren nicht dargestellten Darstellungsebene Dx abgebildet.

Die Darstellungsebenen D2 und D3 repräsentieren die für den Anlagenprozeß relevanten Funktionsgruppen FP bzw. die für die Anlage 1 relevanten Funktionsgruppen FA. Durch Anwahl des Auswahlfeldes 44A oder 44B für die Funktionsgruppe FP "Visualisierung" bzw. für die Funktionsgruppe FA "Service" wird eine dieser Funktionsgruppe FA oder FB zugehörige Funktionsebene FE selektiert, die in der Darstellungsebene D4 dargestellt ist. Die Darstellungsebene D4 zeigt die dieser Funktionsebene FE zugehörigen Prozeßdaten PD in Form eines Kurvendiagramms. Je nach Struktur und Komplexität des Prozesses der Anlage 1 ist anstelle der Anzeige von Prozeßdaten PD die technologische Struktur der Funktionsebene FE in Form von Auswahlfeldern 44 analog zur Darstellungsebene D1 darstellbar.

Je nach Anwahl der Auswahlfelder 44, 44A und 44B sind die einzelnen Darstellungsebenen D1 bis D4 beispielsweise in einer gemeinsamen Auswahlmaske 42 darstellbar. Alternativ kann jede Darstellungsebene D1 bis D4 in der gesamten Auswahlmaske 42 unter größtmöglicher Ausnutzung der Fläche der Auswahlmaske 42 abgebildet werden.

Je nach Bedarf und Anforderung können somit durch eine derartig modular aufgebaute Auswahlmaske 42 prozeßrelevante Prozeßdaten PD, z.B. Rückmeldungen, Zustandsmeldungen, Störmeldungen, etc. gemeinsam mit betriebsrelevanten Anlagendaten AD, z.B. Revisionszyklen, Brennstoffverbrauch, Brennstoffkosten, dargestellt werden. Der in der Anlage 1 ablaufende Gesamtprozeß kann somit in allen Betriebsphasen von nur einer Person überwacht werden. Dabei ist insbesondere gewährleistet, daß mittels der Auswahlmaske 42 durch Integration der verschiedenen Datenverarbeitungssysteme, wie z.B. des Automatisierungssystems 10, des Prozeßsystems 20 und des Verarbeitungssystems 30, gleichzeitig Informationen oder Daten unterschiedlicher Funktionsgruppen FP, FD der Prozeßführung und der Instandhaltung der Anlage 1 graphisch dargestellt werden.

## Patentansprüche

1. Verfahren zur Verarbeitung von anwenderspezifisch in verschiedenen Datenspeichern hinterlegten Daten einer technischen Anlage (1), die in für die Prozeßführung relevante Funktionsgruppen (FP) und in für die Anlage (1 relevante Funktionsgruppen (FA) unterteilt wird,
**dadurch gekennzeichnet, daß** sowohl die Funktionsgruppen (FP) für die Prozeßführung als auch die Funktionsgruppen (FA) für die Anlage (1) jeweils einem Auswahlfeld (44, 44A, 44B) einer gemeinsamen Auswahlmaske (42) zugeordnet werden, wobei die die Funktionsgruppen (FA, FP) repräsentierenden Auswahlfelder (44, 44A, 44B) in einer ersten Darstellungsebene (D1-D4) der Auswahlmaske (42) derart abgebildet werden, daß mittels Verbindungen zwischen den Auswahlfeldern die Relationen zwischen den in Wechselwirkung miteinander stehenden Funktionsgruppen (FA, FP) dargestellt werden, und wobei durch Anwahl eines der Auswahlfelder (44, 44A, 44B) die jeweiligen für die Prozeßführung der Anlage relevanten Prozeßdaten (PD) oder für die Anlage (1) relevanten Anlagendaten (AD) selektiert und in einer weiteren Darstellungsebene (D1-D4) dargestellt werden.

2. Verfahren nach Anspruch 1,
**dadurch gekennzeichnet, daß** jede Funktionsgruppe (FA, FP) jeweils eine Anzahl von Funktionsebenen (FE) umfaßt, denen jeweils eine Anzahl von weiteren Darstellungsebenen (D1-D4) der Auswahlmaske (42) zugeordnet werden, wobei durch Anwahl eines der Auswahlfelder (44, 44A, 44B) einer Darstellungsebene (D1-D4) ein der betreffenden Funktionsebene zugehöriger Teilbereich der Daten ausgewählt und dargestellt wird.

3. Verfahren nach Anspruch 2,
**dadurch gekennzeichnet, daß** die Funktionsgruppen (FA, FP) und/oder die Funktionsebenen (FE) mit den jeweils zugehörigen Relationen in einem zusätzlichen Datenspeicher hinterlegt werden.

4. Vorrichtung zur Verarbeitung von anwenderspezifisch in verschiedenen Datenspeichern hinterlegte Daten einer technischen Anlage (1), die in für die Prozeßführung relevante Funktionsgruppen (FP) und in für die Anlage relevante Funktionsgruppen (FA) unterteilt ist,
**gekennzeichnet durch** eine Auswahlmaske (42) mit einer Mehrzahl von Auswahlfeldern (44, 44A, 44B), denen sowohl Funktionsgruppen (FP) für die Prozeßführung als auch Funktionsgruppen (FA) für die Anlage (1) zugeordnet sind, wobei die die Funktionsgruppen (FA, FP) repräsentierenden Auswahlfelder (44, 44A, 44B) in einer ersten Darstellungsebene (D1-D4) der Auswahlmaske (42) derart abgebildet sind, daß mittels Verbindungen zwischen den Auswahlfeldern (44, 44A, 44B) die Relationen zwischen den in Wechselwirkung miteinander stehenden Funktionsgruppen (FA, FP) dargestellt sind, und wobei **durch** Anwahl eines der Auswahlfelder (44, 44A, 44B) die jeweiligen für die Prozeßführung der Anlage (1) relevanten Prozeßdaten (PD) oder für die Anlage (1) relevanten Anlagendaten (AD) selektierbar und in einer weiteren Darstellungsebene (D1-D4) darstellbar sind.

5. Vorrichtung nach Anspruch 4,
**dadurch gekennzeichnet, daß** jede Funktionsgruppe (FA, FP) jeweils eine Anzahl von Funktionsebenen (FE) umfaßt, denen jeweils eine Anzahl von weiteren Darstellungsebenen (D1-D4) der Auswahlmaske (42) zugeordnet sind, wobei durch Anwahl eines der Auswahlfelder (44, 44A, 44B) einer Darstellungsebene (D1-D4) ein der betreffenden Funktionsebene (FE) zugehöriger Teilbereich der Daten auswählbar und darstellbar ist.

6. Vorrichtung nach Anspruch 4 oder 5,
**dadurch gekennzeichnet, daß** eine relationale Datenbank zur Speicherung der Funktionsgruppen (FA, FP) und/oder der Funktionsebenen (FE) mit den jeweils zugehörigen Relationen vorgesehen ist.

## Claims

1. Method for processing data of a technical installation (1) which are stored in different data memories in a user-specific manner, said installation being subdivided into functional groups (FP) relevant to process control and into functional groups (FA) relevant to the installation (1),
**characterized in that** both the functional groups (FP) for process control and the functional groups (FA) for the installation (1) are each assigned to a selection field (44, 44A, 44B) of a common selection mask (42), the selection fields (44, 44A, 44B) representing the functional groups (FA, FP) being represented in a first display level (D1-D4) of the selection mask (42) in such a way that the relations between the mutually interacting functional groups (FA, FP) are displayed by means of connections between the selection fields, and, by selecting one of the selection fields (44, 44A, 44B), the respective process data (PD) relevant to the process control of the installation or installation data (AD) relevant to the installation (1) being selected and displayed in a further display level (D1-D4).

2. Method according to Claim 1,
**characterized in that** each functional group (FA, FP) respectively comprises a number of functional levels (FE) which are respectively assigned a number of further display levels (D1-D4) of the selection mask (42), in which case, by selecting one of the selection fields (44, 44A, 44B) of a display level (D1-D4), a partial area of the data which is associated with the relevant functional level is selected and displayed.

3. Method according to Claim 2,
**characterized in that** the functional groups (FA, FP) and/or the functional levels (FE) are stored with the respectively associated relations in an additional data memory.

4. Apparatus for processing data of a technical installation (1) which are stored in different data memories in a user-specific manner, said installation being subdivided into functional groups (FP) relevant to process control and into functional groups (FA) relevant to the installation (1),
**characterized by** a selection mask (42) having a plurality of selection fields (44, 44A, 44B) which are assigned both functional groups (FP) for process control and functional groups (FA) for the installation (1), the selection fields (44, 44A, 44B) representing the functional groups (FA, FP) being represented in a first display level (D1-D4) of the selection mask (42) in such a way that the relations between the mutually interacting functional groups (FA, FP) are displayed by means of connections between the selection fields, and, by selecting one of the selection fields (44, 44A, 44B), the respective process data (PD) relevant to the process control of the installation or installation data (AD) relevant to the installation (1) being able to be selected and displayed in a further display level (D1-D4).

5. Apparatus according to Claim 4,
**characterized in that** each functional group (FA, FP) respectively comprises a number of functional levels (FE) which are respectively assigned a number of further display levels (D1-D4) of the selection mask (42), in which case, by selecting one of the selection fields (44, 44A, 44B) of a display level (D1-D4), a partial area of the data which is associated with the relevant functional level can be selected and displayed.

6. Apparatus according to Claim 4 or 5,
**characterized in that** provision is made of a relational database for storing the functional groups (FA, FP) and/or the functional levels (FE) with the respectively associated relations.

## Revendications

1. Procédé de traitement de données, spécifiques à un utilisateur et enregistrées dans différentes mémoires de données, d'une installation technique (1) qui est répartie en des groupes de fonctions (FP) pertinents pour la réalisation du processus et en des groupes de fonctions (FA) pertinents pour l'installation (1),
**caractérisé en ce que** les groupes de fonctions (FP) pour réaliser le processus aussi bien que les groupes de fonctions (FA) pour l'installation (1) sont respectivement associés à un champ de sélection (44, 44A, 44B) d'un masque de sélection (42) commun ; les champs de sélection (44, 44A, 44B) qui représentent les groupes de fonctions (FA, FP) sont alors illustrés dans un premier niveau de représentation (D1-D4) du masque de sélection (42) de telle manière qu'au moyen de liaisons entre les champs de sélection sont représentées les relations entre les groupes de fonctions (FA, FP) qui sont en interaction mutuelle et, par le choix d'un des champs de sélection (44. 44A, 44B), les données de processus (PD) pertinentes pour la gestion du processus de l'installation ou les données d'installation (AD) pertinentes pour l'installation (1) sont alors sélectionnées et représentées dans un autre niveau dé représentation (D1-D4).

2. Procédé selon la revendication 1
**caractérisé en ce que** chaque groupe de fonctions (FA, FP) comprend respectivement un certain nombre de niveaux de fonctions (FE) auxquels sont respectivement associés un certain nombre d'autres niveaux de représentation (D1-D4) du masque de sélection (42), dans lequel on sélectionne et on représente une zone partielle des données qui appartient au niveau de fonction concemé en sélectionnant l'un des champs de sélection (44, 44A, 44B) d'un niveau de représentation (D1-D4).

3. Procédé selon la revendication 2
**caractérisé en ce que** les groupes de fonctions (FA, FP) et/ou les niveaux de fonctions (FE) sont enregistrés avec les relations correspondantes dans une mémoire de données supplémentaire.

4. Dispositif de traitement de données, spécifiques à un utilisateur et enregistrées dans différentes mémoires de données, d'une installation technique (1) qui est répartie en des groupes de fonctions (FP) pertinents pour la réalisation du processus et en des groupes de fonctions (FA) pertinents pour l'installation technique, **caractérisé par** un masque de sélection (42) avec un grand nombre de champs de sélection (44, 44A, 44B) auxquels sont associés aussi bien des groupes de fonctions (FP) pour la réalisation du processus que des groupes de fonctions (FA) pour l'installation (1) ; les champs de sélection (44, 44A, 44B) qui représentent les groupes de fonctions (FA, FP) sont alors illustrés dans un premier niveau de représentation (D1-D4) du masque de sélection (42) de telle manière qu'au moyen de liaisons entre les champs de sélection sont représentées les relations entre les groupes de fonctions (FA, FP) qui sont en interaction mutuelle et, par le choix d'un des champs de sélection (44, 44A, 44B), les données de processus (PD) pertinentes pour la gestion du processus de l'installation (1) ou les données d'installation (AD) pertinentes pour l'installation (1) peuvent alors être sélectionnées et représentées dans un autre niveau de représentation (D1-D4).

5. Dispositif selon la revendication 4
**caractérisé en ce que** chaque groupe de fonctions (FA, FP) comprend à chaque fois un certain nombre de niveaux de fonctions (FE) auxquels sont respectivement associés un certain nombre d'autres niveaux de représentation (D1-D4) du masque de sélection (42), pour lequel on peut sélectionner et représenter une zone partielle de données qui appartient au niveau de fonction (FE) concemé en sélectionnant un des champs de sélection (44, 44A, 44B) d'un niveau de représentation (D1-D4).

6. Dispositif selon la revendication 4 ou 5
**caractérisé en ce que** l'on prévoit une base de données relationnelle pour mémoriser les groupes de fonctions (FA, FP) et/ou les niveaux de fonction (FE) avec à chaque fois les relations qui leur appartiennent.
